(19) Europäisches Patentamt
European Patent Office
Office européen des brevets

(11) Veröffentlichungsnummer: **0 150 430**
**B1**

(12) # EUROPÄISCHE PATENTSCHRIFT

(45) Veröffentlichungstag der Patentschrift: **28.10.87**

(21) Anmeldenummer: **84115674.8**

(22) Anmeldetag: **18.12.84**

(51) Int. Cl.⁴: **C 08 F 8/12**, C 09 D 3/78, C 08 F 218/04, C 08 F 214/18 // (C08F218/04, 214:18, 216:04), (C08F214/18, 218:04, 216:04)

(54) **Vernetzbare, fluorhaltige Copolymere, Lacke auf Basis dieser Copolymeren und deren Verwendung.**

(30) Priorität: **31.12.83 DE 3347655**

(43) Veröffentlichungstag der Anmeldung: **07.08.85 Patentblatt 85/32**

(45) Bekanntmachung des Hinweises auf die Patenterteilung: **28.10.87 Patentblatt 87/44**

(84) Benannte Vertragsstaaten: **AT BE CH DE FR GB IT LI NL SE**

(56) Entgegenhaltungen:
**DE - A - 1 935 756**
**GB - A - 616 927**
**US - A - 3 801 550**

(73) Patentinhaber: **HOECHST AKTIENGESELLSCHAFT, Postfach 80 03 20, D-6230 Frankfurt am Main 80 (DE)**

(72) Erfinder: **Löhr, Gernot, Dr., Schneibsteinstrasse 6, D-8269 Burgkirchen (DE)**
Erfinder: **Mondt, Josef, Dr., Altkönigstrasse 24d, D-6240 Königstein/Taunus (DE)**
Erfinder: **Gräff, Hans, Schöne Aussicht 10, D-6229 Schlangenbad (DE)**

EP 0 150 430 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Beschichtungssysteme auf der Basis von Fluorpolymeren sind in grosser Zahl bekannt. Derartige Beschichtungen werden meist aus Dispersionen in flüssigen Dispergiermedien aufgebracht, deren Teilchengrösse von relativ grobkörnigen bis hinunter zu kolloidalen Teilchengrössen reicht, wobei das flüssige Medium Wasser oder ein organisches Lösungsmittel oder eine Mischung aus beiden ist. Da die gängigen Fluorpolymeren in organischen Lösungsmitteln meist schwer oder gar nicht löslich sind, werden Beschichtungen aus Lösungen, insbesondere aus solchen organischen Lösungsmitteln, die in der Lackindustrie üblich sind, wie beispielsweise Ethylenglykolester, Methylisobutylketon, Toluol, Xylol und dergleichen, verhältnismässig selten angetroffen.
Beschichtungssysteme dieser Art stellen fluorhaltige Copolymere dar, wie sie beispielsweise aus der DE-OS 2804262 oder der GB-PS 2081727 bekannt sind. Die in der letztgenannten Druckschrift beschriebenen Quaterpolymeren aus Fluorolefinen, Cyclohexylvinylethern, Alkylvinylethern und Hydroxyalkylvinylethern ergeben Lacksysteme, die unter Einsatz von Isocyanaten bereits bei Zimmertemperatur gehärtet werden können. Jedoch sind diese Lacke im Hinblick auf ihren Glanz, ihre Verlaufeigenschaften und ihre Witterungsbeständigkeit noch nicht befriedigend und verbesserungsbedürftig.
Zur Beseitigung dieser Nachteile stellt die vorliegende Erfindung ein vernetzbares, fluorhaltiges Copolymeres zur Verfügung, das aus

a) 20 bis 80 Mol-% an copolymerisierten Einheiten eines Vinylesters der Formel

$$CH_2=CH\text{-}O\text{-}CO\text{-}\overset{\displaystyle R^1}{\underset{\displaystyle R^3,}{\overset{|}{\underset{|}{C}}}}\text{-}R^2,$$

worin $R^1$, $R^2$, $R^3$ verzweigte oder geradkettige Alkylreste darstellen und höchstens einer dieser Reste Wasserstoff ist, wobei ferner der gesamte Acylrest des Vinylesters mindestens 9 und höchstens 28 C-Atome besitzt,

b) 5 bis 50 Mol-% an copolymerisierten Einheiten eines Vinylesters der Formel

$$CH_2=CH\text{-}O\text{-}CO\text{-}R^4,$$

worin $R^4$ ein geradkettiger Alkylrest mit 1 bis 3 C-Atomen ist und wobei 90 bis 100% der copolymerisierten Einheiten dieses Vinylesters der Komponente b) in der durch Solvolyse erhaltenen OH-Form vorliegen, sowie

c) copolymerisierten Einheiten eines Fluorolefins in einer Menge, die eine Summe der Komponenten a + b + c auf 100 ergänzt, jedoch mit der Massgabe, dass mindestens 100 Mol-% an copolymerisierten Einheiten dieses Fluorolefins im Copolymeren vorhanden sind,
besteht.

Vorzugsweise besteht dieses Copolymere aus

a) 20 bis 60 Mol-% an copolymerisierten Einheiten eines Vinelyesters der oben definierten Komponente a),

b) 5 bis 30 Mol-% an copolymerisierten Einheiten eines Vinylesters der oben definierten Komponente b), wobei 90 bis 100% der Gesamtzahl der copolymerisierten Einheiten dieses Vinylesters in der durch Solvolyse erhaltenen OH-Form vorliegen, sowie

c) copolymerisierten Einheiten eines Fluorolefins in einer Menge, die die Summe der Komponenten a + b + c auf 100 ergänzt, jedoch mit der Massgabe, dass mindestens 25 Mol-% an copolymerisierten Einheiten dieses Fluorolefins im Copolymeren vorhanden sind.

Der Schaffung dieser erfindungsgemässen Copolymeren liegt der erfinderische Gedanke zugrunde, ein Copolymeres herzustellen, das in üblichen Lacklösungsmitteln gut löslich und das ausserdem bei Raumtemperatur vernetzbar ist, und dies wird erreicht durch ein Copolymeres, das aus einem Fluorolefin, einem praktisch nicht-verseifbaren Vinylester einerseits und einem praktisch weitgehend oder vollständig verseifbaren bzw. verseiften Vinylester andererseits besteht.
Insbesondere bevorzugt sind als Komponente a) in den erfindungsgemässen Copolymeren Vinylester mit verzweigten Acylresten

$$R^2\text{-}\overset{\displaystyle R^1}{\underset{\displaystyle R^3}{\overset{|}{\underset{|}{C}}}}\text{-}CO\text{-},$$

die insgesamt 9 bis 11 C-Atome besitzen und in denen höchstens einer dieser Reste Wasserstoff ist.
Die diesen Acylresten zugrundeliegenden verzweigten Carbonsäuren sind nach der Koch'schen Synthese aus Monoolefinen, Kohlenmonoxid und Wasser zugänglich. Die genannten Carbonsäuren sind unter dem Namen Versatic®-Säuren oder Neo®-Säuren dem Fachmann bekannt. Die entsprechenden Vinylester lassen sich aus solchen verzweigten Carbonsäuren durch Transvinylierung mit Vinylacetat gewinnen. Sie sind aber auch nach der Reppe-Synthese durch Anlagerung von Acetylen an die entsprechenden Carbonsäuren zugänglich.

Geeignete Vinylester für die Komponente b) des Copolymeren sind solche der Formel

$$CH_2=CH\text{-}O\text{-}CO\text{-}R^4,$$

worin $R^4$ den Methyl-, Ethyl- oder Propylrest darstellt. Bevorzugt ist Vinylacetat.
Das als Komponente c) dienende Fluorolefin kann aus dieser Gruppe der Fluorolefine beliebig ausgewählt werden, Gemische verschiedener Fluorolefine untereinander sind eingeschlossen. Der Ausdruck Fluorolefin schliesst Perfluorolefine ein.

Es soll darunter verstanden werden ein Kohlenwasserstoff mit einer – vorzugsweise endständigen – Doppelbindung, dessen H-Atome, angefangen von mindestens einem bis zur Gesamtzahl, durch F substituiert sind und dessen verbleibende

H-Atome teilweise oder vollständig durch Cl ersetzt sein können.

Vorzugsweise wählt man Fluorolefine der Formel $CF_2=CXY$ als Comonomere aus, worin X und Y, gleich oder verschieden, H, F oder Cl bedeuten. Solche Comonomere sind also zum Beispiel Vinylidenfluorid, Trifluorethylen, Chlortrifluorethylen und insbesondere Tetrafluorethylen oder auch Gemische solcher Comonomeren.

Gegebenenfalls kann ein kleiner Teil der Molmenge des obengenannten Fluorolefins der Formel $CF_2CXY$, nämlich 0 bis 20% dieser Molmenge, durch eines oder mehrere der Fluorolefine mit der Formel $CF_2=CF-Z$ ersetzt sein, worin Z einen Perfluoralkylrest, einen Fluoralkylrest mit 1 bis 8 C-Atomen oder einen Rest $-O-R^5$, worin $R^5$ einen Perfluoralkylrest, einen Perfluor[alkoxyalkyl-]-Rest, einen Alkylrest oder einen Cycloalkylrest mit jeweils 1 bis 10 C-Atomen darstellt, bedeutet. beispielsweise sind hier zu nennen Hexafluorpropen und die höheren homologen Perfluor-1-alkene, die auch verzweigt sein können, sowie die teilweise durch Wasserstoff substituierten Homologen dieser höheren Perfluorolefine, ferner Perfluor-[alkylvinylether], vorzugsweise Perfluor-[propylvinylether], Perfluor-[alkoxyalkylvinylether] wie Perfluor-[propoxypropylvinylether], Alkyl- oder Cycloalkylperfluorvinylether wie beispielsweise Ethyl- oder Cyclohexylperfluorvinylether.

Bevorzugt ist es jedoch, ausschliesslich Chlortrifluorethylen oder insbesondere Tetrafluorethylen als Comonomeres der Komponente c) einzusetzen.

Die Herstellung der erfindungsgemässen Copolymeren erfolgt in der Weise, dass zunächst der verzweigtkettige Vinylester der Komponente a), der Vinylester der Komponente b) und das Fluorolefin der Komponente c) der Copolymerisation unterworfen werden, und sodann die Komponente b) des Copolymeren durch Solvolyse, insbesondere mit niederen Alkoholen oder mit Wasser, zu mehr als 90%, vorzugsweise praktisch vollständig in die OH-Form überführt wird.

Polymerisiert wird vorzugsweise zu kolloidalen Dispersionen nach dem Verfahren der Emulsionspolymerisation in wässriger Phase. Dazu müssen der Flotte Emulgatoren in einer Menge von 0,01 bis 2 Gew.-%, vorzugsweise von 0,05 bis 0,5 Gew.-%, bezogen auf die Gewichtsmenge des vorgelegten wässrigen Polymerisationsmediums, zugefügt werden. Im Prinzip sind alle dem Fachmann geläufigen nicht-ionischen und anionischen Emulgatoren die für die Emulsionspolymerisation von Fluorolefinen geeignet sind, einsetzbar. Solche Emulgatoren sind die Ammonium- und Alkalisalze von ω-Hydrofluorcarbonsäuren, von Perfluoralkoxypropionsäuren, insbesondere der Perfluorpropoxypropionsäure, von Perfluoralkylsulfonsäuren und Perfluoralkylphosphonsäuren sowie vorzugsweise von Perfluorcarbonsäuren mit längeren Perfluoralkylketten, insbesondere solchen mit 6 bis 12 C-Atomen im Perfluoralkylrest. Die vorgenannten Emulgatoren können auch in Form ihrer freien Säuren eingesetzt und gegebenenfalls mit Ammoniak neutralisiert werden, wobei durch das Verhältnis von Säure und Ammoniak gleichzeitig der pH-Wert eingestellt werden kann. Auch nicht-fluorierte Emulgatoren können gegebenenfalls eingesetzt werden.

Ferner können gegebenenfalls Puffersubstanzen, wie beispielsweise die Alkali- und Ammoniumsalze der Oxalsäure, der Phosphorsäuren oder der Essigsäure bei der Copolymerisation Anwendung finden. Wenn eine vorzeitige Solvolyse des Vinylesters der Komponente b) vermieden werden soll, ist es zweckmässig, die Copolymerisation bei pH-Werten im sauren oder höchstens schwach alkalischen Bereich zu führen, also etwa bei pH-Werten von 3 bis 8.

Die Copolymerisation der genannten Comonomeren wird in Gegenwart von radikalbildenden Katalysatoren in Gang gesetzt. Für Bildung von Radikalen kommen in Frage entweder eine harte, energiereiche Strahlung oder wasserlösliche, radikalbildende Katalysatoren, wie sie in grosser Zahl dem Fachmann für die Copolymerisation von Fluorolefinen bekannt sind. Solche Katalysatoren sind insbesondere peroxidische Verbindungen. Nur beispielsweise seien hier genannt Wasserstoffperoxid, Acylperoxide, wie zum Beispiel Diacetylperoxid, Dipropionylperoxid, Dibutyrylperoxid, Dibenzoylperoxid, Benzoylacetylperoxid, Dilauroylperoxid, Dibernsteinsäureperoxid oder Diglutarsäureperoxid. Weiterhin sind zu nennen wasserlösliche Persäuren, wie Peressigsäure sowie deren wasserlösliche Salze (insbesondere die Ammonium-, Natrium- oder Kaliumsalze) oder deren Ester, wie zum Beispiel tert.-Butylperoxyacetat und tert.-Butylperoxipivalat. Es können auch eingesetzt werden die wasserlöslichen Salze, insbesondere die Ammonium-, Kalium- und Natriumsalze von anderen Persäuren, wie Peroxomono- und Peroxodisulfate, Perphosphate, Perborate oder Percarbonate. Geeignet sind ferner Perfluoracylperoxide oder ω-Hydrofluoracylperoxide. Eine weitere Klasse von anwendbaren Katalysatoren stellen gewisse wasserlösliche Azoverbindungen dar, wie sie zum Beispiel in den US-Patentschriften 2471959, 2515628 und 2520338 beschrieben werden. Vor allem im niederen Temperaturbereich können als Katalysatoren auch die bekannten wirksamen Redox-Systeme eingesetzt werden, die bei Temperaturen zwischen 10 und 50°C bereits in ausreichendem Masse Radikale erzeugen, von den dem Fachmann für die Polymerisation von Fluorolefinen geläufigen Redox-Systemen seien hier nur beispielhaft genannt die Kombinationen von wasserlöslichen peroxidischen Verbindungen, vorzugsweise von Peroxodisulfaten mit Hydrogensulfit oder Disulfit oder deren Anlagerungsprodukte mit Formaldehyd (Rongalit®), mit Thiosulfat sowie mit Diimin freisetzenden Verbindungen (US-PS 4112211), zum Beispiel mit Hydrazin oder Azodicarbonsäureamid. Auch in diesen Redox-Kombinationen sind die Salze, vorzugsweise die Alkali- und insbesondere die Ammoniumsalze der genannten Verbindungen zugegen.

Dabei kann die gesamte Katalysatormenge am Beginn der Reaktion der Polymerisationsflotte zugefügt werden. Im Falle grösserer Ansätze kann es jedoch zweckmässig sein, die Gesamtmenge des Katalysators kontinuierlich im Verlauf der Polymerisation zuzuschleusen. Ebenso kann man auch einen Teil der Katalysatormenge am Beginn vorgeben und den Rest einmalig oder in Teilmengen nachschleusen. Die Zugabe von Coaktivatoren, also beispielsweise von löslichen Salzen des Eisens und des Silbers kann von Vorteil sein, insbesondere beim Einsatz von Redox-Systemen als Katalysatoren.

Die Herstellung der erfindungsgemässen Copolymeren kann auch nach dem Verfahren der Suspensionspolymerisation durchgeführt werden. Dazu stellt man den erforderlichen, schwach sauren oder schwach alkalischen pH-Bereich durch die Zugabe geeigneter Puffersubstanzen, die meist gleichzeitig auch als Fällungsmittel wirken, ein, wie beispielsweise Ammoniumchlorid, Ammoniumdihydrogenphosphat, Borsäure, Ammoniumoxalat, Borax, Ammoniumcarbonat, Ammoniumhydrogencarbonat, Ammoniumcarbaminat oder Ammoniumpentaborat oder Gemische solcher Verbindungen. Es kann zweckmässig sein, auch bei der Suspensionspolymerisation eine kleinere Menge der obengenannten Emulgatoren hinzuzufügen, um Verklumpungen und Kesselbeläge zu vermeiden und eine gleichmässigere Teilchengrösse des Copolymerisats zu erreichen. Die Gewichtsmenge an solchen Emulgatoren liegt hier im allgemeinen unter 150 ppm, vorzugsweise unter 50 ppm, bezogen auf die Gewichtsmenge der bei Beginn der Polymerisation vorgelegt wässrigen Flotte.

Die Copolymerisation kann auch in organischen Lösungsmitteln, die höchstens eine sehr geringe telogene Aktivität aufweisen und vorzugsweise das gebildete Copolymere nicht lösen, durchgeführt werden. Dafür geeignete Lösungsmittel sind insbesondere perfluorierte oder mit Fluor und Chlor perhalogenierte Lösungsmittel, wie insbesondere 1,1,2-Trichlortrifluorethan oder Perfluorcyclobutan. Aus den obengenannten Katalysatoren müssen dazu jeweils diejenigen, die im betreffenden Lösungsmittel ausreichend löslich sind, ausgewählt werden. Auch bei den oben beschriebenen Verfahren der Suspensions- oder Emulsionspolymerisation im wässrigen Medium kann unter Zusatz von Anteilen solcher Lösungsmittel gearbeitet werden.

Von Vorteil ist auch die Zugabe von geeigneten Kettenübertragungsmitteln mit regelnder Wirkung bei der Copolymerisation sowohl nach dem Emulsions- als auch nach dem Suspensionsverfahren im wässrigen Medium oder im organischen Lösungsmittel. Als Kettenübertragungsmittel geeignet sind aliphatische Alkohole oder Etheralkohole mit kurzer Kette, aliphatische Carbonsäureester oder Ketone, Dialkylglykole, Mercaptane sowie ferner auch gesättigte aliphatische Halogenkohlenwasserstoffe, welche als Halogene, Fluor, Chlor und/oder Brom und gegebenenfalls noch Wasserstoff enthalten. Als Beispiele solcher Halogenkohlenwasserstoffe seien genannt Tetrachlorethan, Trichlorethan, Tetrafluordibromethan sowie insbesondere Chloroform, Methylenchlorid und Tetrachlorkohlenstoff. Das Kettenübertragungsmittel wird üblicherweise bei Beginn der Polymerisation zugegeben, es kann jedoch auch eine Teilmenge abgetrennt und im späteren Verlauf des Prozesses zudosiert werden.

Die Copolymerisation wird bei Temperaturen von 0 bis 100 °C, vorzugsweise von 35 bis 80 °C durchgeführt, wobei sich diese Temperatur im einzelnen insbesondere nach der Art des eingesetzten Katalysators richtet. Das Fluorolefin wird bei der Copolymerisation unter Druck aufgegeben und dieser Druck dann aufrechterhalten. Er kann im Bereich von Werten leicht über Normaldruck bis etwa 40 bar liegen, vorzugsweise wird ein Druck von 5 bar bis 25 bar eingehalten.

Bevorzugt werden bei Beginn der Copolymerisation etwa 5 bis 20 Gew.-% der theoretisch erforderlichen Menge an Vinylestern der Komponente a) und der Komponente b) im Polymerisationsgefäss vorgelegt, der Rest wird dann im Verlauf der Copolymerisation mit dem Fluorolefin zudosiert. Es ist jedoch auch möglich, nur eine Teilmenge des Vinylesters der Komponente a) vorzulegen und den Rest seiner theoretisch erforderlichen Menge zusammen mit der Gesamtmenge an Vinylester der Komponente b) und an Fluorolefin nachzuführen. Schliesslich kann auch die Polymerisation mit der gleichzeitigen Zufuhr aller Komponenten (wobei eine oder mehrere auch vorgemischt sein können) beginnen und diese Zufuhr während des Prozesses fortlaufend fortgesetzt werden.

Nach Beendigung der Polymerisation wird die Polymerisationsflotte in üblicher Weise aufgearbeitet. Im Falle der Fällungspolymerisation nach dem Suspensionsverfahren wird das körnige Polymerisat nach üblichen Trennungsmethoden abgetrennt, beispielsweise durch Filtrieren, Absieben, Zentrifugieren usw. Im Falle der Emulsionspolymerisation wird die erhaltene kolloidale Dispersion durch Hinzufügen von üblichen Koagulationsmitteln wie zum Beispiel Elektrolytsalzen, Mineralsäuren oder organischen Lösungsmitteln oder auch durch das Einbringen von hohen Scherkräften zur Koagulation gebracht und das Koagulat in üblicher Weise von der wässrigen Flotte abgetrennt. Das so erhaltene feuchte Polymerisat wird gewaschen und bei Temperaturen von 10 bis 70 °C getrocknet, gegebenenfalls unter Hindurchblasen von Inertgas.

Das so gewonnene und getrocknete Copolymerisat wird anschliessend einer Nachbehandlung durch Solvolyse zwecks Umwandlung der Estergruppierungen in den Vinylestereinheiten aus Komponenten b) in OH-Gruppen unterzogen. Die Nachbehandlung wird vorzugsweise bei Raumtemperatur mit kurzkettigen Alkanolen mit starken Basen als Katalysatoren durchgeführt. Bei dieser Behandlung wird das Copolymerisat im Alkanol gelöst und anschliessend mit Wasser ausgefällt. Es wird als ein weiss bis schwach gelblich gefärbtes Pulver erhalten, das bei Raumtemperatur zum Zusammenbacken neigt, und anschliessend vorzugsweise im Wirbelbett getrocknet.

Die Verseifung dieser Estergruppe in die freie OH-Form kann aber auch mit jeder anderen dafür geeigneten Methode bewerkstelligt werden, beispielsweise durch Hydrolyse mit wässrigen Alkalien oder mit quaternären Ammoniumhydroxiden.

Das so behandelte Copolymere enthält dann 90 bis 100% der vorherigen Estergruppen der Komponente b) als OH-Gruppen; vorzugsweise ist die Umwandlung praktisch vollständig, das heisst, die noch vorhandenen Vinylestergruppen aus Komponente b) sind nicht mehr analytisch erfassbar. Solche Copolymere besitzen, je nach der Menge der darin ursprünglich enthaltenen copolymerisierten Einheiten der Komponente b) und je nach dem Umwandlungsgrad bei der Solvolyse, eine OH-Zahl von 30 bis 300, vorzugsweise von 40 bis 150.

Die auf diese Weise erhaltenen erfindungsgemässen Copolymeren sind in einer Vielzahl von organischen Lösungsmitteln gut löslich.

Dies trifft vor allem zu für Lösungsmittel und Lösungsmittelgemische wie sie in der Lackindustrie üblicherweise verwendet werden.

Folgende Beispiele sind für solche Lösungsmittel typisch: Aliphatische Alkohole von 1 bis 8 C-Atomen, vor allem diejenigen mit 4 bis 8 C-Atomen;

Polyglykole wie Ethylendiglykol, Ethylentriglykol, Propylendiglykol, Propylentriglykol;

Mono- und Diether solcher Glykole, wie beispielsweise Ethylenglykolmonomethylether, Ethylenglykoldimethylether, Ethylenglykolmonoethylether, Ethylenglykoldiethylether, Ethylenglykolmonobutylether, Ethylenglykoldibutylether;

Glykolester oder Glykoletherester wie zum Beispiel Ethylenglykolacetat oder Ethylenglykolacetatethylether;

alkylierte und dialkylierte Aromaten wie beispielsweise Xylol und Diethylbenzol;

Carbonsäureester, insbesondere der Essig- und Propionsäure mit Alkoholen von 1 bis 6 C-Atomen;

ferner alle Gemische solcher Lösungsmittel, soweit sie homogen miteinander mischbar sind.

Die erfindungsgemässen Copolymeren können als Dispersionen aus wässriger oder organischer Phase direkt für Beschichtungszwecke eingesetzt werden, beispielsweise zur Beschichtung von Vliesen oder Geweben.

Für den Einsatz als Lack wird aber insbesondere der Zusatz eines Vernetzungs- bzw. Härtungsmittels bevorzugt. Dafür kommen in erster Linie Aminoplastharze in Betracht. Damit erhält man wärmehärtbare Überzüge, die hervorragend verlaufen und besonders elastische, haftfeste, korrosions- und witterungsstabile, insbesondere wasserfeste Grundierungen, Decklacke und Einschichtlackierungen ergeben.

Unter Aminoplastharzen versteht man wärmehärtbare Reaktionsprodukte aus Aldehyden, vorzugsweise Formaldehyd, mit polyfunktionellen Aminen, wie beispielsweise Harnstoff, Melamin, Benzoguanamin oder anderen Triazinen. Auch veretherte Produkte kommen in Betracht. Für das Härten solcher mit Aminoplastharzen modifizierter Lacke sind Einbrenntemperaturen von mindestens 120 °C erforderlich. Man kann die Vernetzungsreaktion durch Zusatz eines sauren Katalysators wie beispielsweise p-Toluolsulfonsäure, beschleunigen.

Mit Polyisocyanaten kann eine Härtung schon bei Raumtemperatur erfolgen, jedoch ist auch hier eine Forcierung in der Wärme bei Temperaturen bis zu etwa 80 °C zweckmässig. Schliesslich ist auch die Möglichkeit der Vernetzung mit Epoxidharzen zu erwähnen, die ebenfalls in der Wärme und mit Katalysatoren, insbesondere mit Lithiumsalzen und quaternären Ammoniumsalzen, durchgeführt wird.

Für die Formulierung von Lacksystemen können alle in der Lackindustrie gängigen Pigmente eingesetzt werden, insbesondere Titandioxid, Eisenoxide, aber auch Cadmiumsulfid, Zinksulfid, Bleiweiss, Bariumsulfat, pyrogene Kieselsäure, Bentone und Kreide. Die Pigmentierungshöhe Bindemittel (das heisst erfindungsgemässes Copolymeres): Pigment liegt im Bereich von 1:0,2 bis 1:3,0. Ferner können solche Lackrezepturen übliche Additive wie beispielsweise Verlaufmittel, Dispergiermittel, Netzmittel, Extender oder Hilfsmittel zur Verbesserung von Glanz oder Haftung enthalten.

Die auf die oben geschilderte Weise in Granulatform erhaltenen erfindungsgemässen Copolymeren werden zur Bereitung von Lacksystemen in einem geeigneten organischen Lösungsmittel oder einem Lösungsmittelgemisch in möglichst hoher Konzentration (>40 Gew.-%) gelöst, und in diese Lösung werden das oder die Pigmente und die gegebenenfalls erforderlichen Additive zugemischt und in homogene Verteilung gebracht.

Die unter Zusatz der genannten Vernetzungsmittel formulierten Lacksysteme – die 10 bis 50 Gew.-% des oben definierten fluorierten Copolymeren enthalten – ergeben Überzüge, die auf die verschiedensten Substrate aufgebracht und – je nach Vernetzungskomponente – bei Raumtemperatur gehärtet oder bei höheren Temperaturen eingebrannt werden können. Überzüge können aufgebracht werden insbesondere auf Metalle wie beispielsweise Eisen, Stahl, Aluminium, Kupfer, Bronze und Messing, aber auch auf andere harte Oberfläche wie Glas, Keramik oder auch Holz oder Kunststoffoberflächen.

Das Aufbringen kann mit allen üblichen Methoden bewerkstelligt werden wie Spritzen, Rakeln, Bürsten, Rollen, Tauchen, Fluten, Walzen oder Streichen. Besonders geeignet sind die auf Basis der erfindungsgemässen Copolymeren formulierten Lacksysteme für Industrielackierungen, vor allem nach dem sogenannten Bandbeschichtungsverfahren («coil coating»), einem kontinuierlichen Verfahren zur Beschichtung von Metallbändern mit Geschwindigkeiten von heute bis zu 120 m/min. Nach diesem Verfahren werden vor allem Bleche aus kaltgewalztem Stahl, verzinktem Stahl, aus Aluminium und aus Aluminiumlegierungen beschichtet; für allgemeine Industrielackierungen kommen auch alle technischen Stahlsorten, Buntmetalle und durch Bonderisieren vorbehandelte Bleche in Betracht.

Die aus Überzugsmitteln auf Basis der erfindungsgemässen Copolymeren erhaltenen Überzüge zeichnen sich vor allem aus durch eine hervorragende Bewitterungsstabilität, wie sie sich beispielsweise im sogenannten «Sun Test» zu erkennen gibt. Dieser Test gestattet es, in relativ kurzen Zeiträumen Aussagen über die Bewitterungsstabilität zu machen: Proben werden mit einem Xenon-Strahler über Tage oder Wochen jeweils 3 min unter Wasser und anschliessend 17 min im Trockenen belichtet, und dieser Rhythmus wird beliebig oft wiederholt. Unter diesen Testbedingungen zeigt ein silikon-modifiziertes Polyesterharz, das als besonders vergilbungsbeständig angesehen wird, nach 200 h die ersten Vergilbungserscheinungen, während bei Proben, die die erfindungsgemässen Copolymeren enthalten, auch nach 500 h noch keine Vergilbung zu beobachten ist.

Während üblicherweise Lacksysteme und Überzugsmittel, die auf Basis von fluorhaltigen Polymeren formuliert worden sind, nur schwierig in homogener Verteilung pigmentiert werden können, gelingt dies überraschenderweise mit den auf Basis der erfindungsgemässen Copolymeren hergestellten Formulierungen sehr leicht.

Die erfindungsgemässen Copolymeren zeichnen sich aus durch eine hohe Reaktivität mit Vernetzungskomponenten aller Art, was eine schnelle und vollständige Durchhärtung ermöglicht. Die aus solchen Lacksystemen hergestellten Überzüge und Filme zeigen gute Deckkraft, Glätte, Elastizität, Haftung, Oberflächenhärte und einen hohen Glanz.

Die Erfindung wird durch folgende Beispiele erläutert:

Beispiel 1

In einem 40-Liter-Kessel werden 25 l entionisiertes Wasser, das 40 g Perfluoroctansäure (mit $NH_3$ neutralisiert), 100 g Rongalit® (Anlagerungsprodukt von Formaldehyd an Natriumdithionit), 20 g Ammoniumcarbonat und 1 g Mohr'sches Salz gelöst enthält, vorgelegt. Der Behälter wird in üblicher Weise vom Sauerstoff befreit, und die Temperatur des vorgelegten Mediums wird auf 40 °C gebracht. Man fügt nun 300 $cm^3$ einer Monomeremulsion hinzu, die aus 500 g Vinylacetat, 1500 g eines Vinylesters der Komponente a) (wobei der Acylrest ein Gemisch darstellt aus im wesentlichen einer Acylkomponente mit $R^1 = CH_3$, $R^2 = C_2H_5$, $R^3 = CH_3(CH_2)_4$- und einer weiteren Acyl-Komponente mit $R^1 = CH_3$, $R^2 = CH_3$, $R^3 = CH_3(CH_2)_5$-), 2 l entionisiertem Wasser und 1 g Perfluoroctansäure besteht und die hergestellt worden ist mit Hilfe eines Ultra-Turrax®. Sodann wird die Polymerisation durch Zugabe von 20 g Ammoniumpersulfat bei einem Tetrafluorethylendruck von 10 bar gestartet. Innerhalb von 4 h dosiert man kontinuierlich die restliche Monomeremulsion und weitere 200 g Ammoniumpersulfat zu, die in 2 l entionisiertem Wasser gelöst sind, eine halbe Stunde nach erfolgter Zugabe wird die Polymerisation beendet. Man erhält eine stabile Dispersion, die etwa 3,5 kg Copolymerisat enthält.

Diese Dispersion wird durch Ansäuern mit HCl koaguliert, das anfallende Koagulat wird in entionisiertem Wasser gewaschen und im Wirbelbett getrocknet.

Das so getrocknete Copolymerisat wird in einer Mischung Methanol/Ethanol im Verhältnis 1:1 aufgeschlämmt, in dieser Aufschlämmung wird etwa 1 Gew.-% Natriummethylat, bezogen auf das zugegebene Copolymere, hinzugesetzt. Die Alkoholyse erfolgt bei Raumtemperatur und ist nach 1 h beendet, was dadurch erkennbar ist, dass das Produkt vollständig in Lösung gegangen ist. Man neutralisiert nun mit Essigsäure und fällt das Produkt in Wasser aus. Das anfallende Copolymere ist weiss bis schwach gelblich gefärbt. Es wird im Wirbelbett erneut bei 40 °C getrocknet. Es enthält 51 Mol-% Tetrafluorethylen-Einheiten, 28 Mol-% an copolymerisierten Einheiten des Vinylesters der Komponente a) (Versatic®-Vinylester) und 21 Mol-% an copolymerisierten Einheiten des Vinylacetats. Es besitzt eine OH-Zahl von 120. Das Produkt löst sich in Glykolacetatmonoethylether, eine 50 gew.-%ige Lösung in diesem Lösungsmittel besitzt eine Viskosität von 10 Pas.

Beispiel 2

Die Copolymerisation wird durchgeführt, wie in Beispiel 1 beschrieben, jedoch mit einer Monomeremulsion, welche besteht aus 900 g Vinylacetat, 1200 g eines Versatic®-Vinylesters, wie er in Beispiel 1 definiert worden ist, in 2 l entionisiertem Wasser und unter Zugabe von 10 g Perfluoroctansäure.

Das erhaltene Copolymerisat besteht aus 32 Mol-% an copolymerisierten Einheiten des Tetrafluorethylens, aus 26 Mol-% an copolymerisierten Einheiten des oben definierten Versatic®-Vinylesters der Komponente a) und aus 42 Mol-% an copolymerisierten Einheiten des Vinylacetats. Es besitzt nach Alkoholyse eine OH-Zahl von 245. Eine 50 gew.-%ige Lösung dieses Copolymerisats in Glykolacetatethylether hat eine Viskosität von 40 Pas.

Beispiel 3

Es wird eine Copolymerisation durchgeführt, wie in Beispiel 1, jedoch wird hier keine Monomerenemulsion vorgelegt, sondern die beiden Comonomeren der Komponenten a) und b) werden in vorgemischter Form zugegeben, und zwar in einer Menge von 1200 g des oben definierten Versatic®-Vinylesters der Komponente a) und 300 g Vinylacetat. Von dieser Menge werden 10% vorgelegt und der Rest im Zeitraum von 4 h zudosiert. Getrennt davon wird Tetrafluorethylen zugeführt und ein konstanter Druck von 10,5 bar aufrechterhalten. Die Polymerisationstemperatur beträgt 55 °C. Mit den übrigen Polymerisationshilfsstoffen wird zu Beginn eine Menge von 100 g tert.-Butanol als Kettenübertragungsmittel vorgelegt.

Das erhaltene Copolymerisat besteht aus 50,5 Mol-% an copolymerisierten Einheiten des Tetrafluorethylens, aus 31 Mol-% an copolymerisierten

Einheiten des oben definierten Versatic®-Vinylesters der Komponente a) und aus 18,5 Mol-% copolymerisierten Einheiten des Vinylacetats. Die OH-Zahl ist nach Alkoholyse 85 eine 50 gew.-%ige Lösung in Glykolacetatethylether und hat eine Viskosität von 22 Pas (alle Viskositäten wurden nach der Kugelfallmethode gemessen).

Beispiel 4

Es wird eine Copolymerisation bei 50 °C entsprechend Beispiel 3 durchgeführt, jedoch mit einer Monomermischung, bestehend aus 1500 g des oben definierten Versatic®-Vinylesters und 300 g Vinylpropionat. Man erhält ein Copolymerisat, bestehend aus 37,5 Mol-% an copolymerisierten Einheiten des Tetrafluorethylens, aus 44,5 Mol-% an copolymerisierten Einheiten des oben definierten Versatic®-Vinylesters der Komponente a) und aus 18,0 Mol-% copolymerisierten Einheiten des Vinylpropionats. Nach der Alkoholyse hat das Copolymerisat eine OH-Zahl von 68.

Die folgende Lackrezeptur für einen Weisslack stellt ein typisches Beispiel für Lacksysteme dar, wie sie mit dem erfindungsgemässen Copolymeren fomuliert werden können:

| | |
|---|---|
| Abmischung in der Perlmühle | |
| Copolymeres aus Beispiel 1 | |
| (50% in Glykolacetatethylether) | 10,0 g |
| Glykolacetatethylether | 16,0 g |
| Titandioxid (Typ RN 59) | 4,2 g |
| | 30,2 g |

| | |
|---|---|
| Lackansatz | |
| Perlmühlenansatz wie oben | 30,2 g |
| Desmodur®N (Hexamethylendiisocyanat; 75%ige Lösung) | 2,2 g |
| Dibutylzinndilaurat (1%ige Lösung) | 25,0 mg |

| | |
|---|---|
| Lackkenndaten | |
| Lackfestkörper | ca. 33,5% |
| Bindemittel:Pigment | 1:0,63 |

**Patentansprüche**

1. Vernetzbares, fluorhaltiges Copolymeres, bestehend aus

a) 20 bis 80 Mol-% an copolymerisierten Einheiten eines Vinylesters der Formel

$$\begin{array}{l} \qquad\qquad\qquad\quad R^1 \\ \qquad\qquad\qquad\quad | \\ CH_2=CH\text{-}O\text{-}CO\text{-}C\text{-}R^2, \\ \qquad\qquad\qquad\quad | \\ \qquad\qquad\qquad\quad R^3, \end{array}$$

worin $R^1$, $R^2$ und $R^3$ verzweigte oder geradkettige Alkylreste oder Cycloalkylreste darstellen und höchstens einer dieser Reste Wasserstoff ist, wobei ferner der gesamte Acylrest des Vinylesters mindestens 9 und höchstens 28 C-Atome besitzt,

b) 5 bis 50 Mol-% an copolymerisierten Einheiten eines Vinylesters der Formel

$$CH_2=CH\text{-}O\text{-}CO\text{-}R^4,$$

worin $R^4$ ein geradkettiger Alkylrest mit 1 bis 3 C-Atomen ist und wobei 90 bis 100% der copolymerisierten Einheiten dieses Vinylesters der Komponente b) in der durch Solvolyse erhaltenen OH-Form vorliegen, sowie

c) copolymerisierten Einheiten eines Fluorolefins in einer Menge, die die Summe der Komponenten a + b + c auf 100 ergänzt, jedoch mit der Massgabe, dass mindestens 10 Mol-% an copolymerisierten Einheiten dieses Fluorolefins im Copolymeren vorhanden sind.

2. Vernetzbares, fluorhaltiges Copolymeres gemäss Anspruch 1, dadurch gekennzeichnet, dass es besteht aus

a) 20 bis 60 Mol-% an copolymerisierten Einheiten eines Vinylesters der Komponente a) des Anspruchs 1,

b) 5 bis 30 Mol-% an copolymerisierten Einheiten eines Vinylesters der Komponente b) von Anspruch 1, wobei 90 bis 100% der Gesamtzahl der copolymerisierten Einheiten dieses Vinylesters der Komponente b) in der durch Solvolyse erhaltenen OH-Form vorliegen, sowie

c) copolymerisierten Einheiten eines Fluorolefins in einer Menge, die die Summe der Komponenten a + b + c auf 100 ergänzt, jedoch mit der Massgabe, dass mindestens 25 Mol-% an copolymerisierten Einheiten dieses Fluorolefins im Copolymeren vorhanden sind.

3. Vernetzbares, fluorhaltiges Copolymeres gemäss einem der Ansprüche 1 und 2, dadurch gekennzeichnet, dass der Vinylester der Komponente a) einen Acylrest mit 9 bis 11 C-Atomen enthält, wobei höchstens einer der Reste $R^1$, $R^2$ und $R^3$ Wasserstoff und mindestens einer dieser Reste ein Methylrest ist.

4. Vernetzbares, fluorhaltiges Copolymeres nach einem oder mehreren der Ansprüche 1 bis 3, dadurch gekennzeichnet, dass das Fluorolefin der Komponente c) ein solches der Formel $CF_2=CXY$ ist, worin X und Y, die gleich oder verschieden sein können, H, F oder Cl bedeuten, wobei 0 bis 20% der jeweiligen Molmenge der Komponente c) durch eine fluorolefinische Verbindung der Formel $CF_2=CF\text{–}Z$ ersetzt sein kann, worin Z einen Perfluoralkylrest einen Fluoralkylrest mit 1 bis 8 C-Atomen oder einen Rest $\text{-O-}R^5$, worin $R^5$ einen Perfluoralkylrest, einen Perfluor[alkoxyalkyl]-Rest, einen Alkylrest oder einen Cycloalkylrest mit jeweils 1 bis 10 C-Atomen darstellt, bedeutet.

5. Vernetzbares, fluorhaltiges Copolymeres nach Anspruch 4, dadurch gekennzeichnet, dass das Fluorolefin der Komponente c) Tetrafluorethylen ist.

6. Lackzusammensetzungen für industrielle Anwendungen, enthaltend übliche Pigmente und Füllstoffe, Vernetzungskomponenten, Lösungsmittel und für Lacke übliche Hilfsstoffe, dadurch gekennzeichnet, dass sie 10 bis 50 Gew.-% eines Copolymeren gemäss Anspruch 1 enthalten.

7. Verwendung der Lackzusammensetzungen gemäss Anspruch 6 für das Bandbeschichtungsverfahren.

**Claims**

1. A crosslinkable fluorine-containing copolymer comprising

a) 20 to 80 mol % of copolymerised units of a vinyl ester of the formula

$$\begin{array}{l} \qquad\qquad\quad R^1 \\ \qquad\qquad\quad | \\ CH_2=CH\text{-}O\text{-}CO\text{-}C\text{-}R^2, \\ \qquad\qquad\quad | \\ \qquad\qquad\quad R^3, \end{array}$$

in which

$R^1$, $R^2$, and $R^3$ are branched or straight-chain alkyl radicals or cycloalkyl radicals and at most one of these radicals is hydrogen,

the total acyl radical of the vinyl ester having at least 9 and at most 28 carbon atoms,

b) 5 to 50 mol % of copolymerised units of a vinyl ester of the formula

$$CH_2=CH\text{-}O\text{-}CO\text{-}R^4,$$

in which

$R^4$ is a straight-chain alkyl radical having 1 to 3 carbon atoms,

90 to 100% of the copolymerised units of this vinyl ester of component b) being present in the OH form obtained by solvolysis, and

c) copolymerised units of a fluoroolefin in a quantity which makes the sum of the components a + b + c up to 100, but with the proviso that at least 10 mol % of copolymerised units of this fluoroolefin are present in the copolymer.

2. A crosslinkable fluorine-containing copolymer as claimed in claim 1, comprising

a) 20 to 60 mol % of copolymerised units of a vinyl ester of component a) of claim 1,

b) 5 to 30 mol % of copolymerised units of a vinyl ester of component b) of claim 1, 90 to 100% of the total number of copolymerised units of this vinyl ester of component b) being present in the OH form obtained by solvolysis, and

c) copolymerised units of a fluoroolefin in a quantity which makes the sum of the components a + b + c up to 100, but with the proviso that at least 25 mol % of copolymerised units of this fluoroolefin are present in the copolymer.

3. A crosslinkable fluorine-containing copolymer as claimed in claims 1 or 2, wherein the vinyl ester of component a) contains an acyl radical having 9 to 11 carbon atoms, at most one of the radicals $R^1$, $R^2$, and $R^3$ being hydrogen and at least one of these radicals being a methyl radical.

4. A crosslinkable fluorine-containing copolymer as claimed in one or more of claims 1 to 3, wherein the fluoroolefin of component c) is of the formula $CF_2\text{-}CXY$, in which X and Y can be identical or different and are H, F, or Cl, it being possible for 0 to 20% of the particular molar quantity of component c) to be replaced by a fluoroolefinic compound of the formula $CF_2=CF\text{–}Z$, in which Z is a perfluoroalkyl radical or a fluoroalkyl radical having 1 to 8 carbon atoms or a radical $\text{-}O\text{-}R^5$, in which $R^5$ is a perfluoroalkyl radical, a perfluoro(alkoxyalkyl)radical, an alkyl radical or a cycloalkyl radical each having 1 to 10 carbon atoms.

5. A crosslinkable fluorine-containing copolymer as claimed in claim 4, wherein the fluoroolefin of component c) is tetrafluoroethylene.

6. A surface-coating composition for industrial applications, containing conventional pigments and fillers, crosslinking components, solvents and auxiliaries conventional for surface-coatings, which comprises 10 to 50% by weight of a copolymer as claimed in claim 1.

7. The use of a surface-coating composition as claimed in claim 6 for the coil coating process.

**Revendications**

1. Copolymère fluoré réticulable caractérisé en ce qu'il consiste en:

a) 20 à 80 mol % de motifs copolymèrisés d'un ester vinylique de formule

$$\begin{array}{l} \qquad\qquad\quad R^1 \\ \qquad\qquad\quad | \\ CH_2=CH\text{-}O\text{-}CO\text{-}C\text{-}R^2, \\ \qquad\qquad\quad | \\ \qquad\qquad\quad R^3, \end{array}$$

dans laquelle $R^1$, $R^2$ et $R^3$ représente des restes cycloalkyle ou alkyle à chaîne droite ou ramifiée, l'un au plus de ces restes représentant l'hydrogène, le reste acyle de l'ester vinylique présentant de plus au total au moins 9 et au plus 28 atomes de carbone,

b) 5 à 50 mol % de motifs copolymèrisés d'un ester vinylique de formule

$$CH_2=CH\text{-}O\text{-}CO\text{-}R^4,$$

dans laquelle $R^4$ représente un reste alkyle à chaîne droite en C1–C3, 90 à 100% des motifs copolymèrisés de cet ester vinylique du composant b) se trouvant sous la forme OH obtenue par solvolyse, ainsi que en:

c) des motifs copolymèrisés d'une fluorooléfine, en quantité telle que la somme des composants a + b + c est égale à 100, avec cependant la condition qu'au moins 10 mole % de motifs copolymèrisés de cette fluorooléfine sont présents dans le copolymère.

2. Copolymère fluoré, réticulable, selon la revendication 1, caractérisé en ce qu'il consiste en:

a) 20 à 60 mole % de motifs copolymèrisés d'un ester vinylique du composant a) selon la revendication 1,

b) 5 à 30 mole % de motifs copolymèrisés d'un ester vinylique du composant b) selon la revendication 1, 90 à 100% du nombre total des motifs copolymèrisés de cet ester vinylique du composant b) se trouvant sous la forme OH obtenue par solvolyse, ainsi que en:

c) des motifs copolymèrisés d'une fluorooléfine, en quantité telle que la somme des composants a + b + c est égale à 100, avec cependant la condition qu'au moins 25 mole % de motifs copolymèrisés de cette fluorooléfine sont présents dans le copolymère.

3. Copolymère fluoré, réticulable, selon la revendication 1 ou 2, caractérisé en ce que l'ester vinylique du composant a) contient un reste acyle en C9–C11, au plus l'un des restes $R^1$, $R^2$ et $R^3$ représentant l'hydrogène et au moins l'un de ces restes représentant un groupe méthyle.

4. Copolymère fluoré, réticulable, selon l'une quelconque des revendications 1 à 3, caractérisé en ce que la fluorooléfine du composant c) répond à la formule $CF_2 = CXY$, dans laquelle X et Y, qui peuvent être identiques ou différents, représentent H, F ou Cl, 0 à 20% de la quantité molaire respective du composant c) pouvant être remplacés par un composé fluorooléfinique de formule $CF_2 = CF–Z$, Z représentant un reste perfluoroalkyle, un reste fluoroalkyle en C1–C8, ou un reste $-O-R^5$ dans lequel $R^5$ représente un reste perfluoroalkyle, un reste perfluoro[alcoxyalkyle], un reste alkyle ou un reste cycloalkyle avec dans chaque cas de 1 à 10 atomes de carbone.

5. Copolymère fluoré, réticulable, selon la revendication 4, caractérisé en ce que la fluorooléfine du composant c) est le tetrafluoroéthylène.

6. Compositions pour laques et vernis pour applications industrielles, contenant les pigments, charges, agents de réticulation, et solvants classiques, ainsi que les adjuvants classiques dans le domaine des laques et vernis, caractérisées en ce qu'elles contiennent de 10 à 50% en poids d'un copolymère selon la revendication 1.

7. Utilisation des compositions pour laques et vernis selon la revendication 1 dans le procédé de revêtement de feuillards.